# EUROPÄISCHE PATENTSCHRIFT

(11) **EP 4 299 435 B1**
(45) Veröffentlichungstag und Bekanntmachung des Hinweises auf die Patenterteilung: **05.08.2026**
(21) Anmeldenummer: 22182441.0
(22) Anmeldetag: 30.06.2022
(51) Int. Cl.: B64C 1/00, B64C 1/18, B64D 25/00, B64D 37/32, B64D 45/00, B64D 45/04, B64D 1/16, A62C 3/02, A62C 3/08

(54) **FLUGZEUG MIT BAUCHLANDUNGSSCHUTZ**
AIRCRAFT WITH PROTECTION FOR BELLY LANDINGS
AÉRONEF À PROTECTION CONTRE L'ATTERRISSAGE FORCÉ

(43) Veröffentlichungstag der Anmeldung: 03.01.2024
(73) Patentinhaber: Airbus Operations GmbH, 21129 Hamburg (DE)
(72) Erfinder: Wesseloh, Marc, 21129 Hamburg (DE); Kerber, Markus, 21129 Hamburg (DE)
(74) Vertreter: LKGLOBAL Partnerschaftsgesellschaft mbB

(56) Entgegenhaltungen:
- WO-A2-2017/064209
- JP-A- 2018 144 324
- JP-A- H03 292 290
- US-A- 4 811 793
- US-A1- 2004 050 723
- US-A1- 2008 017 392
- US-A1- 2010 012 773
- US-A1- 2020 031 450

## Beschreibung

Die vorliegende Anmeldung betrifft eine Honigwabenstruktur, ein Flugzeug mit einer solchen Honigwabenstruktur, sowie ein Verfahren zum Erzeugen eines Gleitmittelfilms auf einer Fläche eines Flugzeugs. Speziell geht es in der vorliegenden Anmeldung um einen verbesserten Schutz für den sogenannten Rear Centre Tank (RCT), also den hinteren Mitteltank eines Flugzeugs.

Aus der GB645514 ist ein elektrischer Schalter zur Aktivierung eines Schutzmechanismus vor Schäden bei Bauchlandungen bekannt.

Die JPH03292290 betrifft eine Bauchlandungssicherheitsvorrichtung, bei der - wenn ein Flugzeug aufgrund eines Unfalls eine Bauchlandung durchführt und auf einer Landebahn rutscht - mittels einer Antriebsvorrichtung eine Platte mit einem niedrigen Reibungskoeffizienten so in Position gebracht wird, dass die Platte die Reibung abmildert.

Die JP 2018 144324 A betrifft eine Sandwichplatte mit Wabenstruktur, die in der Lage ist, eine Ablösung aufgrund eines Druckunterschieds zwischen innen und außen zu verhindern und eine Verminderung der Festigkeit zu verhindern.

Die WO 2017/064209 A2 bezieht sich auf Inertisierungssysteme für Flugzeugtreibstofftanks, vor allem für Flugzeuge, bei denen der Treibstoff in Tanks im starren Hauptflügel gelagert wird. Insbesondere kommt es bei der in diesem Dokument zu einer Inertisierung durch Sauerstoffabsorption.

Die US 2008/017392 A1 betrifft die Situation, wenn durch das Eindringen eines durch entstehende Reibung heißen Projektils in an Treibstofftanks angrenzende Teile ein Brand verursacht wird.

In der US 4 811 793 A wird ein Flugzeug mit einer wasserabsorbierenden Polymerschicht z.B. auf dem Rumpf beschrieben, was im Brandfall im Flugzeug vorhandenes Wasser aufnehmen kann und so eine schützende Wasserbarriere bildet.

Ferner ist aus der US2010012773 eine Flugzeugstruktur mit einer Wabenstruktur bekannt, deren Netzgitterstruktur eine Vielzahl von feuerhemmenden Schaumstoffplatten zwischen den Rohren umfassen kann.

Die bekannten Schutzvorrichtungen dienen zwar der Verhinderung eines Brandes, es ist jedoch Aufgabe der vorliegenden Anmeldung, einen weiter verbesserten Schutz für ein bauchlandendes Flugzeug bereitzustellen.

Diese Aufgabe wird durch den Gegenstand von Anspruch 1 und von Anspruch 9 gelöst. Vorteilhafte Ausführungsformen sind Gegenstand der jeweiligen Unteransprüche.

Grundsätzliches Ziel der vorliegenden Anmeldung ist es, den Tank eines Flugzeugs im Falle einer Bauchlandung auf mehrere Weisen umfassend zu schützen. Das herausforderndste Szenario ist hierbei eine Notlandung direkt nach dem Start ohne Zeit oder technische Möglichkeit (z.B. via Jettison System) für einen Treibstoffablass.

Zum einen soll die vorliegende Anmeldung ein Gleiten des Flugzeugrumpfbodens ermöglichen, so dass Brandgefahr und Beschädigungen verringert oder vermieden werden. Zum anderen soll ein System aus verschiedenen Wassereinspritzungen dabei helfen, das Brand- und Beschädigungsrisiko bei einer Bauchlandung zu verringern. Verschiedene Arten von Wasser oder Schaum, die in und außerhalb des Flugzeugs platziert werden, sollen dabei den Rumpf abkühlen.

Die Anmeldung betrifft ein Flugzeug umfassend eine Honigwabenstruktur mit einer ersten Außenseite und einer zweiten Außenseite. Die Honigwabenstruktur hat ferner einen Gleitmittelpuffer zur Aufnahme eines Gleitmittels, wobei auf der ersten Außenseite eine Öffnung zum Gleitmitteleinlass und eine Öffnung zum Luftauslass vorhanden ist. Mit Hilfe dieser Anordnung ist es möglich, den Gleitmittelpuffer mit dem Gleitmittel zu befüllen, ohne dass sich Luftblasen in der Honigwabenstruktur festsetzen, die dann den wertvollen zur Verfügung stehenden Aufnahmeraum für Gleitmittel blockieren. Eine auf diese Weise befüllte Honigwabenstruktur kann im einfachsten Fall, z.B. als äußerer Bestandteil eines Flugzeugrumpfes, allein durch die Wucht des Aufpralls seitens der zweiten Außenseite zerstört werden und hierdurch das Gleitmittel freisetzen. Ein typisches mögliches Gleitmittelvolumen beträgt dabei insgesamt pro Flugzeug ca. 200 l. Bei dem Gleitmittel handelt es sich vorzugsweise um das ohnehin mittransportierte Trink- und Grauwasser, so dass vorhandene Bordressourcen genutzt werden und das Flugzeuggewicht nicht unnötig erhöht wird.

Die Honigwabenstruktur hat auf der zweiten Außenseite ferner wenigstens eine Perforation. Diese wenigstens eine Perforation befindet sich im Normalzustand (also ohne Notlandung) in einem geschlossenen Zustand. Sie ist durch einen Überdruck im Gleitmittelpuffer in einen geöffneten Zustand bringbar. Die wenigstens eine Perforation stellt also eine Sollbruchstelle dar. Wenn die (wenigstens eine) Perforation offen ist, kann Gleitmittel aus dem Gleitmittelpuffer durch die wenigstens eine Perforation hindurch mittels des Überdrucks auf die zweite Außenseite gelangen. Auf diese Weise ist es möglich, das Gleitmittel erst zu einem gewünschten Zeitpunkt freizugeben, um möglichst viel Gleitmittel als Schutz vor Beschädigung/Brand des Tanks zur Verfügung zu haben. Dies kann beispielsweise dann der Fall sein, wenn der Pilot oder ein Avioniksystem eines Flugzeugs feststellt, dass das Fahrwerk nicht ausgefahren ist, obwohl sich das Flugzeug bereits im Sinkflug befindet und eine bestimmte Höhe unterschritten und/oder eine bestimmte Sinkgeschwindigkeit erreicht wurde. Der Überdruck entsteht durch einen größeren Gleitmittel-Volumenstrom, der in den Gleitmittelpuffer hineingebracht wird als der, der aus dem Gleitmittelpuffer entweichen kann. Die wenigstens eine Perforation ist vorzugsweise aus dem gleichen Material wie die zweite Außenseite der Honigwabe, nur dünner, so dass sie wie eine Sollbruchstelle funktioniert. Diese Sollbruchstellen können durch eine Kunststoffdecklage (unverstärkt) oder durch eine Lackierung als Spritzfüller aufgetragen werden (0,05 bis 0,15 mm)

Die Honigwabenstruktur umfasst vorzugsweise ein erstes Honigwabenpanel und ein zweites Honigwabenpanel, wobei das erste Honigwabenpanel die erste Außenseite der Honigwabenstruktur umfasst und das zweite Honigwabenpanel die zweite Außenseite der Honigwabenstruktur umfasst. In der einfachsten Ausführungsform bilden also zwei Honigwabenpanele die erfindungsgemäße Honigwabenstruktur. Selbstverständlich sind auch mehr als zwei Panele denkbar, allerdings wird die Honigwabenstruktur dann natürlich auch schwerer. Die die Honigwabenstruktur bildende Honigwabenpanele können grundsätzlich selbstverständlich auch noch weitere (vom Gleitmittel abgeschottete) eingelassene Bestandteile von anderen Flugzeugsystemen, wie z.B. Rohre oder Verkabelung umfassen, die platzsparend in das Honigwabensystem eingelassen wurden. Dies ist allerdings nur in einem Maße sinnvoll, bei dem das Gleitmittelpuffervolumen durch die Zusatzelemente in der Honigwabenstruktur nicht unnötig verkleinert wird.

Grundsätzlich sei erwähnt, dass die vorliegende Idee selbstverständlich auch mit einem anderen Material als einer Honigwabe (Honeycomb) durchgeführt werden kann. Die verwendete Struktur muss in sich Gleitmittel-(d.h. Wasser- oder Löschmittel-)-durchlässig sein, so dass sich das Gleitmittel gleichmäßig innerhalb der Wabenstruktur verteilen kann. Der Kern dieser Struktur sollte jedenfalls honigwabenartig aufgebaut sein, insbesondere jedoch seitlich durchlässig für Gleit- bzw. Löschmittel.

Gemäß einer Ausführungsform ist ein Flugzeug vorgesehen mit einer Kabine zur Aufnahme von Passagieren und/oder Fracht mit einem Fußboden, wobei der Fußboden eine wie zuvor beschriebene Honigwabenstruktur umfasst, so dass sich das in dem Gleitmittelpuffer befindliche Gleitmittel durch Überdruck freisetzen lässt. Auf diese Weise kann der Innenraum via die wenigstens eine, vorzugsweise via eine Vielzahl an Perforationen mit Gleitmittel berieselt werden. In dieser Konstellation ist das Gleitmittel vorteilhafterweise feuerhemmend, wie beispielsweise Wasser oder Feuerlöschschaum. Weiter vorteilhaft ist die Honigwabenstruktur in räumlicher Nähe zum Tank des Flugzeugs angeordnet, so dass die feuerhemmende Wirkung genau dort eingesetzt wird, wo sie im Notfall am dringendsten benötigt wird. Das mittels dieser Sprinkler- bzw. Berieselungsanlage in dem Rumpf verteilte Gleitmittel konzentriert sich dann naturgemäß am niedrigsten Punkt der Rumpfverkleidung.

Vorzugsweise mündet die wenigstens eine Perforation in ein Rohrsystem, das geeignet ist, um das freigesetzte Gleitmittel zu einem gewünschten Zielort im bzw. am Flugzeug zu bringen. Durch die extrem kompakte Bauweise eines Flugzeugs kann es sonst passieren, dass sich das Gleitmittel durch die Vielzahl an Bauelementen wie z.B. Rohren oder Kabelsträngen an einer Stelle staut, die nicht zum Schutz des RCTs im Falle einer Bauchlandung beitragen kann. Das erfindungsgemäße Rohrsystem zur Verteilung des Gleitmittels hat typischerweise einen Durchmesser von 1,27 bis 5,08 cm (0,5 bis 2 Zoll). Es sollte vorteilhafterweise auf dem kürzesten Weg zwischen Wassertank und Anwendung installiert sein sowie ein Gefälle in Richtung Anwendung aufweisen.

Speziell bevorzugt mündet das Rohrsystem in einen Tank des Flugzeugs, der zur Aufnahme von Treibstoff geeignet ist. Wird die wenigstens eine Perforation durch Überdruck in einen geöffneten Zustand versetzt, so gelangt das Gleitmittel via das Rohrsystem in den Tank. Bevorzugt handelt es sich bei dem Gleitmittel um Wasser (Dichte ~1 g/cm³), während der Treibstoff eine geringere Dichte hat, so dass das dichtere Wasser eine Schicht im unteren Bereich des Tanks bildet, die der Bauchlandung am nächsten ist, während der Treibstoff als Schicht darüber angeordnet ist. Auf diese Weise wird der Treibstoff vor zu großer Reibungswärme geschützt, wenn das Flugzeug auf der Bauchseite rutscht.

Ein Flugzeug kann ferner eine Rumpfverkleidung haben, wobei die Rumpfverkleidung eine innere Seite und eine äußere Seite umfasst, und wobei die Rumpfverkleidung wenigstens eine der wie zuvor beschriebenen Honigwabenstruktur-Varianten umfasst. In den beiden einfachsten Varianten gelangt so das Gleitmittel, wenn sich die wenigstens eine Perforation in geöffneten Zustand befindet, über die wenigstens eine Perforation auf die äußere Seite der Rumpfverkleidung. Dort bildet sich dann ein dünner Film, der ein Gleiten ermöglicht und die entstehende Reibung und somit die Gefahr einer Funkenbildung verringert. Alternativ oder zusätzlich zu diesem Gleitsystem ("slide system") kann die Rumpfverkleidung natürlich an unterschiedlichen Bereichen verschieden bzw. ergänzend ausgelegt sein. Beispielsweise kann es zum einen das Gleitsystem geben und an einer weiteren Stelle des Flugzeugbauchs wird die äußere Seite der Rumpfverkleidung einfach durch den Bauchlandungsaufprall zerstört und das Gleitmittel auf diese Weise freigesetzt. Durch eine Kombination der verschiedenen Ausführungsformen der Honigwabenstruktur und ihrer Anbindungen an ein Rohrsystem kann man den Gesamtschutz optimieren.

Vorteilhafterweise umfasst ein Flugzeug nicht nur ein wie zuvor beschriebenes Gleitsystem, sondern auch eine wie darüber beschriebene Berieselungsanlage, so dass sich beide Schutzwirkungen gemeinsam verstärken bzw. ergänzen.

Bevorzugt umfasst das Gleitmittel Wasser und/oder einen Löschschaum. Dies ermöglicht eine problemlose Mitnahme in einem Flugzeug und hilft bei einer effizienten Feuer- bzw. Funkenbekämpfung.

Bevorzugt umfasst das erfindungsgemäße Flugzeug einen Frischwassertank und/oder einen Grauwassertank, wobei darin vorhandenes Wasser über Zuleitungen eines Rohrsystems aus dem Frischwassertank und/oder Grauwassertank in den Gleitmittelpuffer bringbar ist. Auf diese Weise werden in einem normalen Passagierflugzeug üblicherweise vorhandene Ressourcen im Notfall genutzt. Natürlich ist es auch denkbar, dass sicherheitshalber noch ein oder mehrere weitere Wassertanks an Bord des Flugzeugs installiert sind und somit das im Fall einer Bauchlandung bereitstellbare Wasservolumen vergrößern. Auf diese Weise kann die Berieselungsanlage und/oder das Gleitsystem über einen längeren Zeitraum im Einsatz sein, so dass sich die Wahrscheinlichkeit erhöht, dass das Gleitmittel im richtigen Moment freigesetzt wird bzw. zur Verfügung steht.

In einer weiteren speziell bevorzugten Ausgestaltung umfasst das Flugzeug Einspeisungspunkt auf seiner Außenhaut, die in das Rohrsystem münden. Auf diese Weise kann zusätzlich zu dem Löschmittelvorrat nach der Bruchlandung von außen über die Flughafenfeuerwehr Gleitmittel, wie z.B. Löschschaum über das Rohrleitungssystem in das Löschsystem hinzugefügt werden. Dies würde die Flugzeugevakuierung unterstützen. Vorteilhafterweise sind diese Außenanschlüsse auf Backbord oder Steuerbord des Flugzeugs und/oder am Bug und/oder Heck angeordnet, um auf die Bruchlandungssituation vor Ort individuell eingehen zu können, da gegebenenfalls nicht alle Seiten eines bruchgelandeten Flugzeugs zugänglich sind.

Die vorliegende Anmeldung betrifft ferner ein nicht beanspruchtes Bauchlandeschutzsystem für ein Flugzeug wie zuvor beschrieben, wobei das Flugzeug ferner umfasst: Ein Fahrwerk, ein Radioaltimeter zur Feststellung einer Flughöhe des Flugzeugs, einen Fahrwerksdetektor zur Bestimmung, ob das Fahrwerk ausgefahren ist, und eine Steuerung zum Halten eines geschlossenen Zustand der wenigstens einen Perforation und zum Erzeugen eines geöffneten Zustands der wenigstens einen Perforation, wobei die wenigstens eine Perforation in einen geöffneten Zustand gebracht wird, wenn das Radioaltimeter (im Sinkflug) eine bestimmte Flughöhe feststellt, der Fahrwerksdetektor jedoch feststellt, dass das Fahrwerk noch nicht ausgefahren ist.

Vorteilhafterweise umfasst die o.g. (und nicht beanspruchte) Steuerung einen manuellen Mechanismus und/oder einen automatischen Mechanismus, um die wenigstens eine Perforation in einen geöffneten Zustand zu bringen. Hierbei kann beispielsweise der Pilot eine (optionale) manuelle Voraktivierung des Mechanismus einstellen, die dann gefolgt wird von einer automatischen Auslösung des Öffnungsmechanismus für die wenigstens eine Perforation - getriggert durch das Radioaltimetersignal, wenn das Signal vom Fahrwerkssensor mitteilt, dass sich das Fahrwerk in einem nicht ausgefahrenen Zustand befindet.

Das erfindungsgemäße Verfahren zum Erzeugen eines Gleitmittelfilms auf einer Fläche eines Flugzeugs, wobei das Flugzeug ein Fahrwerk und eine Honigwabenstruktur wie weiter oben beschrieben umfasst, umfasst folgende Schritte: Feststellen einer bestimmten Flughöhe des Flugzeugs mittels eines Radioaltimeters, Feststellen, ob das Fahrwerk ausgefahren ist mittels eines Fahrwerksdetektors, und Bringen der wenigstens einen Perforation durch einen Gleitmittelüberdruck in einen geöffneten Zustand, so dass Gleitmittel aus dem Gleitmittelpuffer fließt. Mit Hilfe dieser Verfahrensschritte ist es möglich, dass eine gezielte Freisetzung von Gleitmittel aus der Honigwabenstruktur in Form einer Berieselung ("sprinkler system") bzw. in Form einer gezielten Aufbringung des Gleitmittels auf die zweite Außenseite der Honigwabenstruktur erreicht wird. Die Honigwabenstruktur kann grundsätzlich im Inneren eines Flugzeugs angeordnet, bevorzugt aber als Bestandteil der äußeren Rumpfverkleidung, insbesondere als Bestandteil der Flugzeugbauchverkleidung (des sogenannten "belly fairings") ausgestaltet sein.

In einer anderen Möglichkeit für das erfindungsgemäße Verfahren zum Erzeugen eines Gleitmittelfilms auf einer Fläche eines Flugzeugs wie zuvor beschrieben, wobei das Flugzeug ein Fahrwerk, eine Honigwabenstruktur wie zuvor beschrieben, sowie einen Tank zur Aufnahme von Treibstoff mit einer inneren Oberfläche und einer äußeren Oberfläche umfasst, wobei die Fläche des Flugzeugs die innere Oberfläche des Tanks ist, umfasst es die folgenden Schritte: Feststellen einer bestimmten Flughöhe des Flugzeugs mittels Radioaltimeter, Feststellen, ob das Fahrwerk ausgefahren ist mittels eines Fahrwerksdetektors und Bringen der wenigstens einen Perforation durch einen Gleitmittelüberdruck in einen geöffneten Zustand, so dass Gleitmittel aus dem Gleitmittelpuffer fließt, wobei das Gleitmittel eine höhere Dichte als der Treibstoff hat, ferner mit dem Schritt Einbringen des Gleitmittels durch das Rohrsystem in den mit Treibstoff zumindest teilweise gefüllten Tank, so dass sich in dem Tank eine untere Schicht mit Gleitmittel und eine auf der unteren Gleitmittelschicht angeordneten oberen Schicht mit Treibstoff bildet. Vorteilhafterweise bietet hier der Gleitmittelfilm also nicht nur grundsätzlichen Schutz als Löschmittel, sondern schützt im Schadensfall (wenn der untere Bereich des Tanks beschädigt wird, auch als Gleitmittel die untere Seite des Tanks, z.B. des RCTs, indem er die Reibung verringert und somit auch die entstehende Reibungswärme. Der Gleitmittelfilm kann eine sehr dünne Schicht von einigen µm oder nm sein, grundsätzlich ist aber auch denkbar, dass es mehrere cm sind. Im letzteren Fall kann man dann eher allgemein von einer Gleitmittelschicht sprechen als von einem Gleitmittelfilm.

Die Erfindung wird im Folgenden unter Bezugnahme auf die folgenden Zeichnungen erläutert.
Figur 1a zeigt ein Flugzeug gemäß Stand der Technik sowie Figur 1b einen vergrößerten Teilschnitt des zugehörigen Flugzeugrumpfs mit der Bauchverkleidung ("belly fairing").
Figur 2a zeigt eine erste Ausführungsform einer erfindungsgemäßen Honigwabenstruktur als geschlossene Platte mit einem Wassereinlass und einem Luftauslass.
Figur 2b zeigt eine zweite Ausführungsform einer erfindungsgemäßen Honigwabenstruktur mit geöffneten Poren (Öffnen durch Überdruck).
Figur 2c zeigt eine dritte Ausführungsform einer erfindungsgemäßen Honigwabenstruktur (Honigwabenstruktur mit zwei Honigwabenpanelen mit Perforationen).
Figur 3 zeigt vier nebeneinander angeordnete Panele aus einer erfindungsgemäßen Honigwabenstruktur für eine Flugzeugrumpfverkleidung.
Figur 4a zeigt einen Flugzeugrumpfteilschnitt mit einer Berieselungsanlage.
Figur 4b zeigt einen Fußboden eines Flugzeugs mit einer erfindungsgemäßen Honigwabenstruktur.

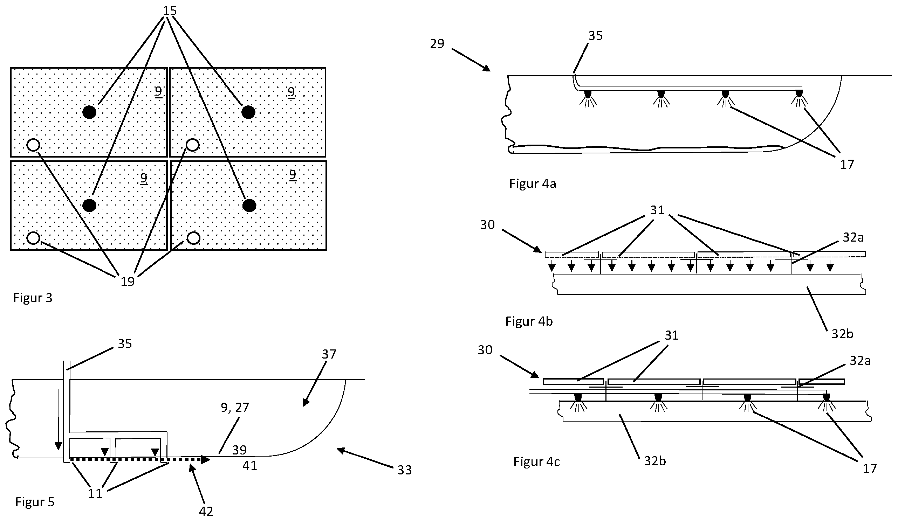

Figur 4 c zeigt eine genauere Darstellung einer installierten Berieselungsanlage.
Figur 5 zeigt einen Flugzeugrumpfteilschnitt mit einer erfindungsgemäßen Honigwabenstruktur und Rohrsystem.

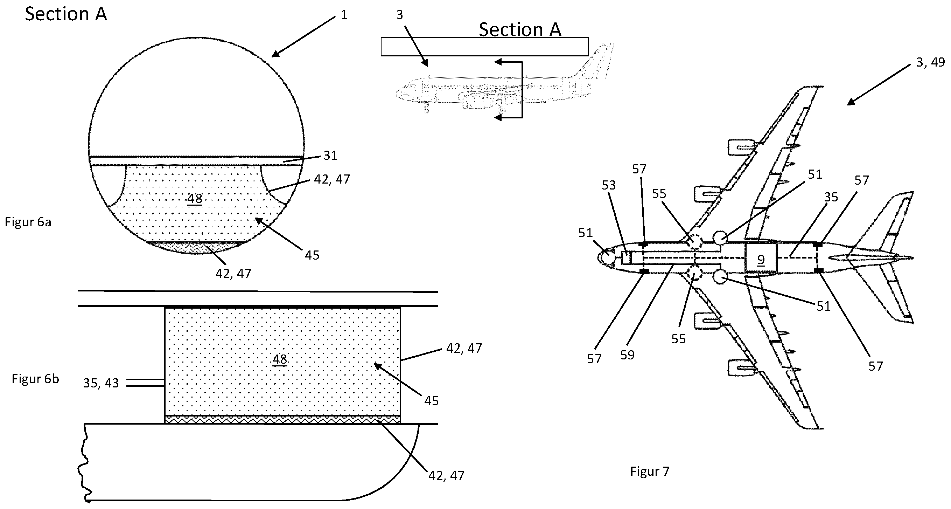

Figur 6a zeigt einen Querschnitt eines Flugzeugs mit einem Tank, bei dem der untere Teil mit einem Gleitmittel und der darüber angeordnete Teil mit Treibstoff gefüllt ist.
Figur 6b zeigt einen Flugzeugrumpfteilschnitt, wobei ein Teil eines Rohrsystems für ein Gleitmittel in den Tank mündet.
Figur 7 zeigt ein Flugzeug mit einem Bauchlandeschutzsystem (nicht beansprucht).

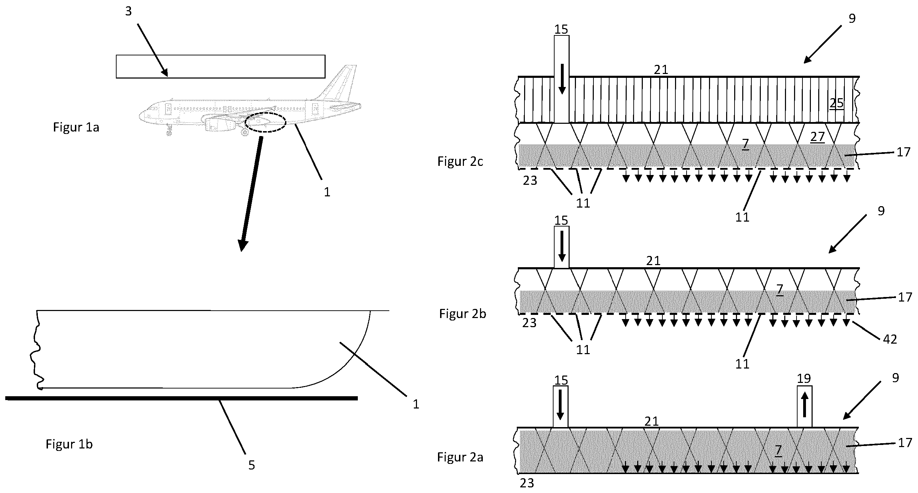

Figur 1 zeigt einen Rumpf 1 eines Flugzeugs 3, das eine Bauchlandung (z.B. durch Versagen des Fahrwerks) erlitten hat, so dass die Rumpfverkleidung des Flugzeugbauchs ("belly fairing") direkten Kontakt zum Boden 5 hat. Hierbei besteht ein hohes Risiko, dass der hintere Mitteltank ("rear centre tank", RCT) beschädigt wird. In dem Tank ist üblicherweise hochentzündlicher Treibstoff enthalten: Je nachdem wie viel der geplanten Strecke ein Flugzeug bereits hinter sich gebracht hat in unterschiedlichen Mengen, insbesondere dann, wenn es sich um ein Flugzeug handelt, bei dem während des Flugs kein Treibstoff abgelassen werden kann oder man keine Zeit hat, um den Treibstoff noch aufzubrauchen, ist der Tank natürlich noch sehr voll. Es gilt also folgendes zu minimieren: Hitze, fliegende Funken, Feuer oder andere schädliche Einwirkungen, die zu einer Beschädigung des RCTs führen können.

Gemäß der vorliegenden Erfindung wird dieses Ziel unterstützt durch eine spezielle Ausgestaltung der Rumpfverkleidung, wie in Figuren 2a-c zu sehen.

Grundsätzlich soll jeweils ein Gleitmittelpuffer 7 in der Honigwabenstruktur 9 der Bauchverkleidung den Tank schützen. Es sind verschiedene Ausführungsformen möglich: Zum einen kann die Honigwabenstruktur 9 geschlossen sein. Zum anderen kann wenigstens eine Perforation 11 an der unteren Seite 13 der Honigwabenstruktur 9 der Bauchverkleidung vorhanden sein. Die Honigwabenstruktur 9 ist so konstruiert, dass sie durch eine Öffnung zum Gleitmitteleinlass 15 mit Gleitmittel 17 gefüllt werden kann. Dies kann realisiert sein durch eine hohle Struktur mit Luftablasslöchern 19, so dass eine Befüllung mit z.B. Wasser möglich ist. Die Gleitmittelfüllung zerstört die Wabenstruktur 9 allerdings irreversibel, die Platte muss also nach der Füllung ersetzt werden. Die wenigstens eine Perforation 11 wird vorzugsweise durch einen Gleitmittelüberdruck geöffnet, kann aber natürlich auch durch den Aufprall aufgerissen werden.

In Figur 2a ist eine Honigwabenstruktur 9 zu sehen mit einer ersten Außenseite 21 und einer zweiten Außenseite 21, mit einem Gleitmittelpuffer 7 zur Aufnahme eines Gleitmittels, vorzugsweise Wasser oder Löschschaum, wobei auf der ersten Außenseite 19 die Öffnung zum Gleitmitteleinlass 15 und ferner die Öffnung zum Luftauslass 19 vorhanden ist. Selbstverständlich ist es grundsätzlich denkbar, dass mehrere Öffnungen 15,19 vorhanden sind.

In Figur 2b ist eine weitere Honigwabenstruktur 9 zu sehen, wobei die Honigwabenstruktur 9 auf der zweiten Außenseite 23 nun jedoch mehrere Perforationen 11 hat, die im Normalzustand in einem geschlossenen Zustand sind. Dabei sind diese Perforationen 11 durch einen Überdruck im Gleitmittelpuffer 7 in einen geöffneten Zustand bringbar, so dass Gleitmittel 17 aus dem Gleitmittelpuffer 7 durch die Perforationen 11 auf die zweite Außenseite 23 gelangt, dort einen Gleitmittelfilm 42 bildet und so für eine geringere Reibung für einen über den Boden 5 rutschenden Flugzeugbauch sorgt.

Eine weitere Variante der Honigwabenstruktur 9 ist in Figur 2c abgebildet: Hier umfasst die Honigwabenstruktur 9 ein erstes Honigwabenpanel 25 und ein zweites Honigwabenpanel 27, wobei das erste Honigwabenpanel 25 die erste Außenseite 21 der Honigwabenstruktur 9 und das zweite Honigwabenpanel 27 die zweite Außenseite 23 der Honigwabenstruktur umfasst. Auf diese Weise wird die Honigwabenstruktur 9 fester und somit stabiler.

Natürlich sind grundsätzlich auch mehr als zwei Schichten der Honigwabenpanele denkbar.

Durch die Gleitmittelbereitstellung wird nicht nur ein Gleiten ermöglicht, sondern auch eine Kühlung bewirkt, was ebenfalls zur Brandunterdrückung und somit zum Schutz des RCTs beiträgt.

Figur 3 zeigt eine Draufsicht auf den grundsätzlichen Aufbau einer Flugzeugbauchverkleidung, die hier aus vier Honigwabenstruktur-Elementen 9 aufgebaut ist. Man sieht jeweils eine Öffnung zum Gleitmitteleinlass 15 und eine Öffnung zum Luftauslass 19. Selbstverständlich sind auch mehr oder weniger Honigwabenstruktur-Elemente 9 denkbar, je nachdem wie viele zur Rumpfverkleidung notwendig sind.

Die Figuren 4 a, b und c und 5 zeigen vorzugsweise kombinierbare Teile eines Bauchlandungsschutzsystem: Ein Berieselungssystem 29 ("Sprinklersystem") in einem Kabinenfußboden bzw. in einer Frachtraumdecke 30 in Figur 4 und ein Gleitsystem 33 ("Bauchrutschsystem") in der Rumpfverkleidung in Figur 5. (Der RCT ist in Figuren 4 und 5 nicht abgebildet.)

Das Sprinklersystem umfasst vorzugsweise eine wie zuvor beschriebene Honigwabenstruktur. Hierbei führt das angedeutete Rohrsystem 35 das Gleitmittel in einen (in Figur 4a nicht dargestellten) Gleitmittelpuffer, von wo aus es dann gezielt durch Erzeugung eines Überdrucks "freigeschaltet" wird, so dass das Gleit-/Löschmittel 17 austreten kann und für eine Kühlung des RCTs sorgt, das Feuer löscht oder (bei bereits beschädigter Rumpfverkleidung) für eine verminderte Reibung sorgt.

Wie in Figur 4b dargestellt, ist es denkbar, dass die Fußbodenplatten 31 des Kabinenbodens 30, die via Sitzschienen 32a auf den Querbalken (den sogenannten Crossbeams) 32b aufliegen die Honigwabenstruktur enthalten.

Auch unterhalb des Kabinenbodens 30 können Honigwaben-Fußbodenplatten installiert werden, die ebenfalls perforiert sind, so dass sie den RCT von oben benetzten. Es ist aber auch eine direkte Berieselung in diesem Bereich denkbar.

Ein herkömmliches oder sehr simpel aufgebautes Berieselungssystem 29, bei dem ein Gleitmittel 17, wie beispielsweise Wasser, einfach durch ein Rohrsystem 35 im Inneren des Flugzeugs, unterhalb des Kabinenbodens 30, mittels Schwerkraft bereitgestellt wird, ist beispielsweis in Figur 4c zu sehen. Natürlich kann diese Anordnung auch zusätzlich noch ergänzt werden mit den in Figur 4b dargestellten Honigwabenstruktur-Fußbodenplatten 31, die einen Gleitmittelpuffer umfassen.

In diesen Fällen würde das Berieselungssystem 29 auch noch einsatztüchtig sein, wenn die Rumpfverkleidung bereits beschädigt ist, aber das Kabineninnere noch funktionsfähig ist.

Das in Figur 5 dargestellte Gleitsystem 33 verwendet ebenfalls die zuvor beschriebene Honigwabenstruktur 9 mit den hier bereits geöffnet dargestellten Perforationen: Man sieht eine Rumpfverkleidung 37, wobei die Rumpfverkleidung eine innere Seite 39 und eine äußere Seite 41 hat. Die Rumpfverkleidung 37 umfasst eine der zuvor beschriebenen Honigwabenstrukturen 9. Ferner sieht man ein Rohrsystem 35, durch das das Gleitmittel 17 zu den Perforationen 11 strömt (in der Figur angedeutet durch die Pfeile), so dass das Gleitmittel 17, wenn sich die Perforationen 11 in geöffneten Zustand befinden, durch diese Perforationen 11 auf die äußere Seite 41 der Rumpfverkleidung gelangt. Dort bildet sich ein Gleitmittelfilm 42, der für eine verminderte Reibung sowie für eine Kühlung der Außenhaut und somit auch letztlich des RCTs sorgt.

Zusätzlich kann zum Schutz des RCTs noch eine weitere Maßnahme ergriffen werden, wie in Figuren 6a (Rumpf-Querschnitt mit Schnittkante A) und 6b (seitlicher Teilschnitt des Flugzeugrumpfs) zu sehen: Das Rohrsystem 35 kann nicht nur zu den in der Honigwabenstruktur 9 vorhandenen Perforationen 11 führen, sondern alternativ oder zusätzlich durch eine entsprechende Rohrzuführung 43 auch direkt in den Tank 45. Verwendet man ein Gleitmittel 17 mit einer größeren Dichte als der des Treibstoffs, so bildet sich im unteren Bereich des Tanks 45 eine schützende Gleitmittelschicht 42, 47 aus. Je nach Gleitmittelmenge ist bei dieser Ausführungsform der Gleitmittelfilm also etwas dicker als bei der Variante, bei der das Gleitmittel verteilt durch die Perforationen der unteren Schicht einer Honigwabenstruktur austritt. Die Gleitmittelschicht 42, 47 ist vorzugsweise aus Wasser oder einem geeigneten Löschschaum. Der Treibstoff 48 kann anschließend selbstverständlich nicht ohne Aufbereitung weiterverwendet werden.

In einer Ausführungsform hat das Flugzeug einen Frischwassertank und/oder einen Grauwassertank, wobei das Wasser über Zuleitungen aus dem Frischwassertank und/oder Grauwassertank in den Gleitmittelpuffer 7 bringbar ist. Grundsätzlich kann jedoch auch noch ein zusätzlicher Wassertank vorgesehen sein, wodurch sich dann allerdings natürlich auch das Gesamtgewicht des Flugzeugs erhöht.

In Figur 7 ist ein Teil eines Bauchlandeschutzsystems 49 für ein Flugzeug 3 zu erkennen. Dabei hat das Flugzeug 3 ein Fahrwerk, ein Radioaltimeter zur Feststellung einer Flughöhe des Flugzeugs, einen oder mehrere Fahrwerksdetektoren 51 zur Bestimmung, ob das Fahrwerk ausgefahren ist (Hauptfahrwerksdetektor ("Main landing gear bay detector") und Bugfahrwerksdetektor ("Nose landing gear bay detector")), und eine Steuerung 53 zum Halten eines geschlossenen Zustand der wenigstens einen Perforation (in der erfindungsgemäßen Honigwabenstruktur) und zum Erzeugen eines geöffneten Zustands der wenigstens einen Perforation, wobei die wenigstens eine Perforation in einen geöffneten Zustand gebracht wird, wenn das Radioaltimeter (im Sinkflug) eine bestimmte Flughöhe detektiert, der Fahrwerksdetektor 51 jedoch feststellt, dass das Fahrwerk noch nicht ausgefahren ist. Diese Informationen werden üblicherweise über eine elektrische Verkabelung 59 ausgetauscht, es ist natürlich auch eine kabellose Lösung möglich.

Hierdurch kann das Rohrsystem 35 bzw. die Honigwabenstruktur-Elemente 9 unmittelbar vor der Landung (mit Landebahn in Sichtweite) mit Wasser aus dem Wassertank 55 geflutet werden, zum Beispiel bei Versagen des Fahrwerks. Dies wird so spät wie möglich gemacht, da lediglich eine beschränkte Gleitmittelmenge zur Verfügung steht (z.B. 200 1). Vorzugsweise wird das Bauchlandeschutzsystem 49 automatisch zum Öffnen der Perforationen durch das Radioaltimetersignal getriggert, es kann jedoch auch manuell auslösbar sein. Um die Gleitmittelmenge möglichst effizient zu nutzen, kann die Steuerung 53 ferner zusätzlich noch eine manuelle Prä-Aktivierung umfassen, die beispielsweise die Perforationen z.B. durch einen Luftüberdruck bereits vorab in einen geöffneten Zustand bringt, so dass anschließend das Gleitmittel sehr schnell an die Öffnungen der Perforationen oder in den Tank gelangt. Nach der Bauchlandung kann über die Flughafenfeuerwehr weiteres Löschmittel in das Löschsystem einspeisen werden. Dazu muss im vorderen und hinteren Teil des Flugzeuges sowie auf beiden Seiten ein zusätzlicher Einspeisepunkt 57 integriert sein, die wiederum in das Rohrsystem 35 münden. Dies könnte sich positiv auf die Evakuierungszeit auswirken.

### Bezugszeichen

- 1: Rumpf
- 3: Flugzeug
- 5: Boden
- 7: Gleitmittelpuffer
- 9: Honigwabenstruktur
- 11: Perforation
- 13: untere Seite der Honigwabenstruktur
- 15: Öffnung zum Gleitmitteleinlass
- 17: Gleitmittel
- 19: Luftablasslöcher
- 21: erste Außenseite der Honigwabenstruktur
- 23: zweite Außenseite der Honigwabenstruktur
- 25: erstes Honigwabenpanel
- 27: zweites Honigwabenpanel
- 29: Berieselungssystem / Sprinklersystem
- 30: Kabinenfußboden bzw. Frachtraumdecke
- 31: Fußbodenplatte
- 32a: Sitzschienen
- 32b: Querbalken
- 33: Gleitsystem
- 35: Rohrsystem
- 37: Rumpfverkleidung
- 39: innere Seite der Rumpfverkleidung
- 41: äußere Seite der Rumpfverkleidung
- 42: Gleitmittelfilm
- 43: Rohrzuführung in den Tank
- 45: Tank
- 47: Gleitmittelschicht
- 48: Treibstoff
- 49: Bauchlandeschutzsystem
- 51: Fahrwerksdetektor
- 53: Steuerung zum Halten eines geschlossenen Zustands
- 55: Wassertank
- 57: Einspeisepunkt
- 59: elektrische Verkabelung

## Patentansprüche

1. Flugzeug (3) umfassend eine Honigwabenstruktur (9) mit einer ersten Außenseite (21) und einer zweiten Außenseite (23), mit einem Gleitmittelpuffer (7) zur Aufnahme eines Gleitmittels (17), wobei auf der ersten Außenseite (21) eine Öffnung zum Gleitmitteleinlass (15) und eine Öffnung zum Luftauslass (19) vorhanden ist, wobei die Honigwabenstruktur (9) auf der zweiten Außenseite (23) wenigstens eine Perforation (11) hat, wobei die wenigstens eine Perforation (11) im Normalzustand in einem geschlossenen Zustand ist, und wobei die wenigstens eine Perforation (11) durch einen Überdruck im Gleitmittelpuffer (7) in einen geöffneten Zustand bringbar ist, so dass Gleitmittel (17) aus dem Gleitmittelpuffer (7) durch die wenigstens eine Perforation (11) auf die zweite Außenseite (23) gelangt.

2. Flugzeug (3) nach Anspruch 1, die Honigwabenstruktur umfassend ein erstes Honigwabenpanel (25) und ein zweites Honigwabenpanel (27), wobei das erste Honigwabenpanel (25) die erste Außenseite (21) der Honigwabenstruktur (9) umfasst und das zweite Honigwabenpanel (27) die zweite Außenseite (23) der Honigwabenstruktur (9) umfasst.

3. Flugzeug (3) nach einem der Ansprüche 1 oder 2, wobei die Honigwabenstruktur Teil eines Fußbodens (31) des Flugzeugs (3) mit einer Kabine zur Aufnahme von Passagieren und/oder Fracht ist.

4. Flugzeug (3) nach einem der Ansprüche 1, 2 oder 3, wobei die wenigstens eine Perforation (11) in ein Rohrsystem (35) für ein Gleitmittel mündet.

5. Flugzeug (3) nach Anspruch 4, wobei das Rohrsystem (35) in einen Tank (45) des Flugzeugs mündet, der zur Aufnahme von Treibstoff geeignet ist.

6. Flugzeug (3) nach Anspruch 1, wobei das Flugzeug (3) eine Rumpfverkleidung (37) umfasst, wobei die Rumpfverkleidung (37) eine innere Seite (39) und eine äußere Seite (41) hat, wobei die Rumpfverkleidung (37) die Honigwabenstruktur (9) umfasst, so dass das Gleitmittel, wenn sich die wenigstens eine Perforation (11) in geöffneten Zustand befindet, über die wenigstens eine Perforation (11) auf die äußere Seite der Rumpfverkleidung (37) gelangt.

7. Flugzeug (3) nach einem der vorhergehenden Ansprüche, wobei das Gleitmittel (17) Wasser und/oder ein Feuerlöschmittel umfasst.

8. Flugzeug (3) nach einem der vorhergehenden Ansprüche, wobei das Flugzeug einen Frischwassertank (55) und/oder einen Grauwassertank (55) umfasst, und wobei das Wasser über Zuleitungen eines Rohrsystems (35) aus dem Frischwassertank und/oder Grauwassertank in den Gleitmittelpuffer (7) bringbar ist.

9. Verfahren zum Erzeugen eines Gleitmittelfilms (42) auf einer Fläche eines Flugzeugs nach einem der Ansprüche 1-8, wobei das Flugzeug (3) ferner ein Fahrwerk umfasst,
mit den Schritten
- Feststellen einer bestimmten Flughöhe des Flugzeugs (3) mittels eines Radioaltimeters,
- Feststellen, ob das Fahrwerk ausgefahren ist mittels eines Fahrwerksdetektors (51) und
- Bringen der wenigstens einen Perforation (11) durch einen Gleitmittelüberdruck in einen geöffneten Zustand, so dass Gleitmittel (17) aus dem Gleitmittelpuffer (7) fließt.

10. Verfahren nach Anspruch 9 zum Erzeugen eines Gleitmittelfilms (42) auf einer Fläche eines Flugzeugs nach Anspruch 5, wobei das Flugzeug (3) ferner einen Tank (45) umfasst zur Aufnahme von Treibstoff mit einer inneren Oberfläche und einer äußeren Oberfläche,
wobei die Fläche des Flugzeugs die innere Oberfläche des Tanks (45) ist,
wobei das Gleitmittel (7) eine höhere Dichte als der Treibstoff hat,
ferner mit dem Schritt
- Einbringen des Gleitmittels (17) durch das Rohrsystem (35, 43) in den mit Treibstoff (48) zumindest teilweise gefüllten Tank (45), so dass sich in dem Tank (45) eine untere Schicht mit Gleitmittel (17) und eine auf der unteren Schicht angeordneten oberen Schicht mit Treibstoff (48) bildet.

## Claims

1. Aircraft (3) comprising a honeycomb structure (9) with a first outer side (21) and a second outer side (23), with a lubricant buffer (7) for receiving a lubricant (17), wherein an opening to the lubricant inlet (15) and an opening to the air outlet (19) are present on the first outer side (21), wherein the honeycomb structure (9) has at least one perforation (11) on the second outer side (23), wherein the at least one perforation (11) is in a closed state in the normal state, and wherein the at least one perforation (11) can be brought into an open state by an overpressure in the lubricant buffer (7), so that lubricant (17) passes from the lubricant buffer (7) through the at least one perforation (11) to the second outer side (23).

2. Aircraft (3) according to claim 1, the honeycomb structure comprising a first honeycomb panel (25) and a second honeycomb panel (27), wherein the first honeycomb panel (25) comprises the first outer side (21) of the honeycomb structure (9) and the second honeycomb panel (27) comprises the second outer side (23) of the honeycomb structure (9).

3. Aircraft (3) according to one of claims 1 or 2, wherein the honeycomb structure is part of a floor (31) of the aircraft (3) with a cabin for receiving passengers and/or cargo.

4. Aircraft (3) according to one of claims 1, 2 or 3, wherein the at least one perforation (11) opens into a pipe system (35) for a lubricant.

5. Aircraft (3) according to claim 4, wherein the pipe system (35) opens into a tank (45) of the aircraft which is suitable for receiving fuel.

6. Aircraft (3) according to claim 1, wherein the aircraft (3) comprises a fuselage fairing (37), wherein the fuselage fairing (37) has an inner side (39) and an outer side (41), wherein the fuselage fairing (37) comprises the honeycomb structure (9), so that the lubricant passes via the at least one perforation (11) to the outer side of the fuselage fairing (37) when the at least one perforation (11) is in the open state.

7. Aircraft (3) according to one of the preceding claims,
wherein the lubricant (17) comprises water and/or a fire extinguishing agent.

8. Aircraft (3) according to one of the preceding claims,
wherein the aircraft comprises a fresh water tank (55) and/or a grey water tank (55), and wherein the water can be brought from the fresh water tank and/or grey water tank into the lubricant buffer (7) via feed lines of a pipe system (35).

9. Method for producing a lubricant film (42) on a surface of an aircraft according to one of claims 1-8, wherein the aircraft (3) further comprises a landing gear,
comprising the steps of
- determining a specific flight altitude of the aircraft (3) by means of a radioaltimeter,
- determining whether the landing gear is extended by means of a landing gear detector (51), and
- bringing the at least one perforation (11) into an open state by a lubricant overpressure, so that lubricant (17) flows out of the lubricant buffer (7).

10. Method according to claim 9 for producing a lubricant film (42) on a surface of an aircraft according to claim 5, wherein the aircraft (3) further comprises a tank (45) for receiving fuel with an inner surface and an outer surface, wherein the surface of the aircraft is the inner surface of the tank (45),
wherein the lubricant (7) has a higher density than the fuel,
further comprising the step of
- introducing the lubricant (17) through the pipe system (35, 43) into the tank (45) at least partially filled with fuel (48), so that a lower layer of lubricant (17) forms in the tank (45), with an upper layer of fuel (48) situated on top of the lower layer.

## Revendications

1. Aéronef (3) comprenant une structure en nid d'abeilles (9) avec un premier côté extérieur (21) et un second côté extérieur (23), avec un réservoir de lubrifiant (7) pour recevoir un lubrifiant (17), dans lequel une ouverture vers l'entrée de lubrifiant (15) et une ouverture vers la sortie d'air (19) sont présentes sur le premier côté extérieur (21), dans lequel la structure en nid d'abeilles (9) a au moins une perforation (11) sur le second côté extérieur (23), dans lequel l'au moins une perforation (11) est dans un état fermé dans l'état normal, et dans lequel l'au moins une perforation (11) peut être amenée dans un état ouvert par une surpression dans le réservoir de lubrifiant (7) de sorte que le lubrifiant (17) parvienne du réservoir de lubrifiant (7) à travers l'au moins une perforation (11) sur le second côté extérieur (23).

2. Aéronef (3) selon la revendication 1, la structure en nid d'abeilles comprenant un premier panneau en nid d'abeilles (25) et un second panneau en nid d'abeilles (27), dans lequel le premier panneau en nid d'abeilles (25) comprend le premier côté extérieur (21) de la structure en nid d'abeilles (9) et le second panneau en nid d'abeilles (27) comprend le second côté extérieur (23) de la structure en nid d'abeilles (9).

3. Aéronef (3) selon l'une quelconque des revendications 1 ou 2, dans lequel la structure en nid d'abeilles fait partie d'un plancher (31) de l'aéronef (3) avec une cabine pour recevoir des passagers et/ou du fret.

4. Aéronef (3) selon l'une quelconque des revendications 1, 2 ou 3, dans lequel l'au moins une perforation (11) débouche dans un système de tuyau (35) pour un lubrifiant.

5. Aéronef (3) selon la revendication 4, dans lequel le système de tuyau (35) débouche dans un réservoir (45) de l'aéronef qui est approprié pour recevoir du carburant.

6. Aéronef (3) selon la revendication 1, dans lequel l'aéronef (3) comprend un carénage de fuselage (37), dans lequel le carénage de fuselage (37) a un côté intérieur (39) et un côté extérieur (41), dans lequel le carénage de fuselage (37) comprend la structure en nid d'abeilles (9) de sorte que le lubrifiant, lorsque l'au moins une perforation (11) est dans l'état ouvert, parvienne par l'intermédiaire de l'au moins une perforation (11) sur le côté extérieur du carénage de fuselage (37).

7. Aéronef (3) selon l'une quelconque des revendications précédentes, dans lequel le lubrifiant (17) comprend de l'eau et/ou un agent d'extinction d'incendie.

8. Aéronef (3) selon l'une quelconque des revendications précédentes, dans lequel l'aéronef comprend un réservoir d'eau fraîche (55) et/ou un réservoir d'eau grise (55), et dans lequel l'eau peut être amenée par l'intermédiaire de conduites d'alimentation d'un système de tuyau (35) du réservoir d'eau fraîche et/ou du réservoir d'eau grise dans le réservoir de lubrifiant (7).

9. Procédé de production d'un film de lubrifiant (42) sur une surface d'un aéronef selon l'une quelconque des revendications 1 à 8, dans lequel l'aéronef (3) comprend en outre un train d'atterrissage,
comprenant les étapes consistant à
- déterminer une altitude de vol déterminée de l'aéronef (3) au moyen d'un radioaltimètre,
- déterminer si le train d'atterrissage est déployé au moyen d'un détecteur de train d'atterrissage (51), et
- amener l'au moins une perforation (11) dans un état ouvert par une surpression de lubrifiant de sorte que le lubrifiant (17) s'écoule du réservoir de lubrifiant (7).

10. Procédé selon la revendication 9 de production d'un film de lubrifiant (42) sur une surface d'un aéronef selon la revendication 5, dans lequel l'aéronef (3) comprend en outre un réservoir (45) pour recevoir du carburant avec une surface intérieure et une surface extérieure,
dans lequel la surface de l'aéronef est la surface intérieure du réservoir (45),
dans lequel le lubrifiant (7) a une densité supérieure à celle du carburant,
comprenant en outre l'étape
- introduire le lubrifiant (17) à travers le système de tuyau (35, 43) dans le réservoir (45) au moins partiellement rempli de carburant (48) de sorte qu'une couche inférieure avec du lubrifiant (17) et une couche supérieure avec du carburant (48) disposée sur la couche inférieure se forment dans le réservoir (45).
